# EUROPÄISCHE PATENTANMELDUNG

(11) **EP 1 482 721 A1**
(43) Veröffentlichungstag der Anmeldung: **01.12.2004**
(21) Anmeldenummer: 03101518.3
(22) Anmeldetag: 26.05.2003
(51) Int. Cl.: H04N 1/028

(54) **Vorrichtung zum Erfassen von in einer Phosphorschicht enthaltenen Informationen**

(71) Anmelder: Agfa-Gevaert AG, 51373 Leverkusen (DE)
(72) Erfinder: Reiser, Georg, 80337, München (DE); Bode, Andreas, 81476, München (DE)

(57) **Zusammenfassung**

Vorrichtung zum Erfassen von in einer Phosphorschicht enthaltenen Informationen mit mehreren einzelnen Strahlungsquellen (11) zum Aussenden von Stimulationslicht (12), welches entlang einer Stimulationslinie (16) auf die Phosphorschicht (21) trifft und zur Anregung von Emissionslicht (17) in der Phosphorschicht (21) geeignet ist, und einem Detektor (25) zum Erfassen des in der Phosphorschicht (21) angeregten Emissionslichts (17).

Zur Gewährleistung einer möglichst hohen Qualität des erfassten Bildes ist erfindungsgemäß ein länglicher Hohlspiegel (14) zur Fokussierung des von den einzelnen Strahlungsquellen (11) ausgesandten Stimulationslichts (12) auf die Phosphorschicht (21) vorgesehen.

## Beschreibung

Die Erfindung betrifft eine Vorrichtung zum Erfassen von in einer Phosphorschicht enthaltenen Informationen gemäß dem Oberbegriff des Anspruchs 1.

Gattungsgemäße Vorrichtungen werden, insbesondere für medizinische Zwecke, im Bereich der Computer-Radiographie (CR) eingesetzt. Hierbei werden Röntgenaufnahmen in einer Phosphorschicht aufgezeichnet, indem die durch ein Objekt, beispielsweise einen Patienten, hindurchtretende Röntgenstrahlung als latentes Bild in der Phosphorschicht gespeichert wird. Zum Auslesen des latenten Bildes wird die Phosphorschicht mit Stimulationslicht bestrahlt und dabei zur Aussendung von Emissionslicht angeregt, welches dem in der Phosphorschicht gespeicherten latenten Bild entspricht. Das Emissionslicht wird von einem optischen Detektor erfasst und in elektrische Signale umgewandelt, welche nach Bedarf weiterverarbeitet, auf einem Monitor dargestellt oder an einem entsprechenden Ausgabegerät, wie z. B. einem Drucker, ausgegeben werden.

Aus dem Stand der Technik sind Vorrichtungen bekannt, bei welchen das von einer Lichtquelle ausgehende Stimulationslicht auf einen linienförmigen Bereich der Phosphorschicht fokussiert wird. Zur Fokussierung dienen im Allgemeinen Zylinderlinsen. In Fällen, in denen die Lichtquelle durch eine Vielzahl einzelner Strahlungsquellen gebildet wird, tritt jedoch das Problem auf, dass die Schärfe der Stimulationslinie, auf welche die von den einzelnen Strahlungsquellen ausgesandten Stimulationslichtbündel fokussiert werden, entlang der Stimulationslinie in Abhängigkeit vom jeweiligen Abstand der einzelnen Strahlungsquellen schwankt. Beispielsweise führt eine äquidistante Anordnung der einzelnen Strahlungsquellen zu einem periodisch schwankenden Verlauf der Schärfe der Stimulationslinie. Mit der Schärfe der Fokussierung des Stimulationslichts schwankt auch die Breite der Stimulationslinie auf der Phosphorschicht. Hierdurch wird die Bildqualität beeinträchtigt, da für diese eine möglichst scharfe Begrenzung der Stimulationslinie erforderlich ist.

Es ist Aufgabe der Erfindung, eine Vorrichtung zum Erfassen von in einer Phosphorschicht enthaltenen Informationen anzugeben, bei welcher eine möglichst hohe Bildqualität gewährleistet ist.

Diese Aufgabe wird gemäß Anspruch 1 durch einen länglichen, insbesondere zylinderförmigen, Hohlspiegel zur Fokussierung des von den einzelnen Strahlungsquellen ausgesandten Stimulationslichts auf die Phosphorschicht gelöst.

Durch die erfindungsgemäße Verwendung eines länglichen Hohlspiegels lässt sich das Auftreten von Schärfe- und Breitenschwankungen der Stimulationslinie auf der Phosphorschicht im Vergleich zur Verwendung von Zylinderlinsen stark reduzieren. Dadurch wird bei aus mehreren einzelnen Strahlungsquellen zusammengesetzten Lichtquellen eine hohe Gleichmäßigkeit der Schärfe und Breite der Stimulationslinie erreicht und damit eine hohe Qualität des aus der Phosphorschicht ausgelesenen Bildes gewährleistet.

In einer bevorzugten Ausführung ist vorgesehen, dass die einzelnen Strahlungsquellen entlang einer Linie angeordnet sind, welche insbesondere parallel zur Stimulationslinie verläuft. Hierdurch wird auf einfache Weise eine noch höhere Homogenität der Breite der Stimulationslinie erreicht.

Eine weitere Ausgestaltung sieht vor, dass die einzelnen Strahlungsquellen jeweils Stimulationslichtbündel aussenden, welche durch den Hohlspiegel auf die Stimulationslinie fokussiert werden und sich auf der Stimulationslinie zumindest teilweise überlagern. Durch die Überlagerung der einzelnen Stimulationslichtbündel in Richtung der Stimulationslinie wird eine hohe Intensität des Stimulationslichts bei gleichzeitig niedrigen Intensitätsschwankungen entlang der Stimulationslinie erreicht.

Vorzugsweise ist der Hohlspiegel parallel zur Stimulationslinie angeordnet. Hierdurch lassen sich Schärfe- und Breitenschwankungen auf einfache Weise noch weiter herabsetzen.

In einer weiteren bevorzugten Ausgestaltung der Erfindung ist vorgesehen, dass der Hohlspiegel als Zylinderspiegel ausgebildet ist, welcher im Querschnitt die Form eines Kreisbogens aufweist. In alternativen Varianten dieser Ausgestaltung weist der Zylinderspiegel im Querschnitt einen asphärischen Verlauf auf, insbesondere in Form eines Ellipsenbogens oder Parabelbogens. Bei allen genannten Querschnittsformen des Zylinderspiegels wird eine im Vergleich zu entsprechend geformten Zylinderlinsen starke Reduzierung von Schärfe- und Breitenschwankungen der Stimulationslinie erreicht.

In einer weiteren Ausführungsform ist vorgesehen, dass die optische Achse im Querschnitt des Hohlspiegels, welcher insbesondere einen kreisbogenförmigen Querschnitt aufweist, den Hohlspiegel in einem Scheitelpunkt schneidet und die Strahlungsquellen jeweils um einen Kippwinkel um den Scheitelpunkt gegen die optische Achse des Hohlspiegels gekippt sind. Durch Kippen der Strahlungsquellen gegen die optische Achse des Hohlspiegels wird auch die Stimulationslinie, auf welche das von den einzelnen Strahlungsquellen ausgehende Stimulationslicht fokussiert wird, in entgegengesetzte Richtung gegen die optische Achse des Hohlspiegels gekippt. Durch eine entsprechende Wahl des Kippwinkels kann somit die Entfernung der Strahlungsquellen von der Stimulationslinie an konstruktive Erfordernisse angepasst werden.

Vorzugsweise genügt der auf die optische Achse im Querschnitt des Hohlspiegels bezogene Abstand d der Strahlungsquellen und/oder der Stimulationslinie vom Scheitelpunkt des Hohlspiegels der Beziehung d = R cos²ω, wobei R den Krümmungsradius des Hohlspiegels und ω den Kippwinkel bezeichnet. Durch Astigmatismus und Koma bedingte Abbildungsfehler, welche mit ansteigendem Kippwinkel ω zunehmen, können auf diese Weise sehr klein gehalten werden, so dass eine hohe Abbildungsschärfe und damit Bildqualität gewährleistet ist.

In einer weiteren Ausführung der Erfindung ist vorgesehen, dass die Strahlungsquellen durch den Hohlspiegel, welcher insbesondere einen kreisbogenförmigen Querschnitt aufweist, in einem Maßstab von 1 : M auf die Phosphorschicht abgebildet werden und M einen Wert zwischen etwa 0,5 und 2 annimmt. Der Abbildungsmaßstab, d. h. das Verhältnis aus Bildgröße zu Gegenstandsgröße, nimmt hierbei einen Wert zwischen 2 : 1 (M = 0,5, Vergrößerung) und 1 : 2 (M = 2, Verkleinerung) an. Hierdurch werden Abbildungsfehler, insbesondere auf Grund von Astigmatismus und Koma, stark reduziert, wodurch ein hohes Maß an Schärfe bei der Abbildung der Strahlungsquellen auf die Phosphorschicht erreicht wird. Dies gewährleistet eine hohe Qualität des aus der Phosphorschicht ausgelesenen Bildes.

Eine weitere Ausgestaltung der Erfindung sieht vor, dass der Detektor mehrere parallel zur Stimulationslinie angeordnete Detektorelemente aufweist. Hierdurch wird eine ortsaufgelöste Erfassung des von der Stimulationslinie ausgehenden Emissionslichts ermöglicht.

Die Erfindung wird nachfolgend anhand von Figuren näher erläutert. Es zeigen:
- Fig. 1: ein erstes Ausführungsbeispiel der Erfindung in Seitenansicht;
- Fig. 2: das in Fig. 1 dargestellte erste Ausführungsbeispiel in Draufsicht;
- Fig. 3: ein zweites Ausführungsbeispiel der Erfindung; und
- Fig. 4: ein drittes Ausführungsbeispiel der Erfindung.

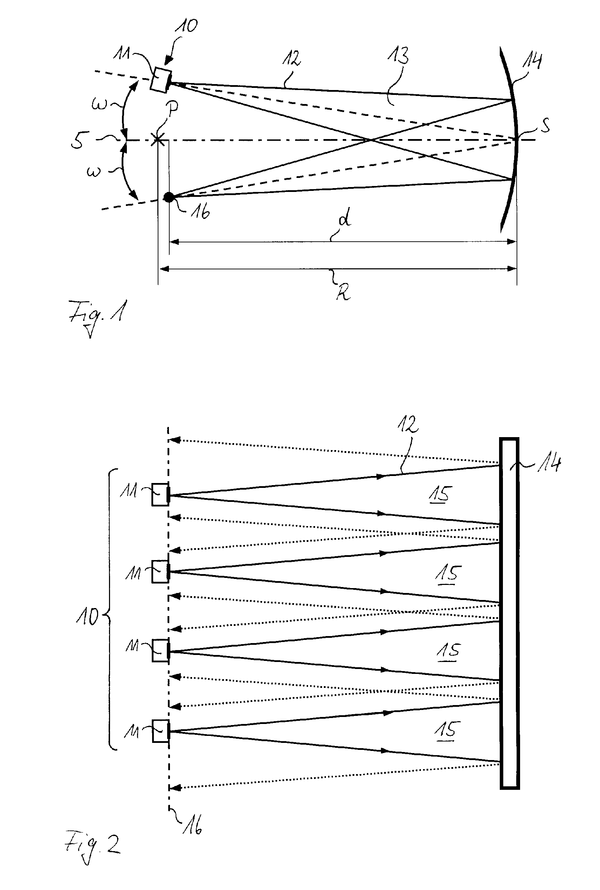

Fig. 1 zeigt ein erstes Ausführungsbeispiel der Erfindung in Seitenansicht. Eine Lichtquelle 10 sendet Stimulationslicht 12 in Form eines in Figurenebene divergenten Stimulationslichtbündels 13 aus, welches an einem länglichen Hohlspiegel 14, der senkrecht zur Figurenebene verläuft, reflektiert und dabei auf eine ebenfalls senkrecht zur Figurenebene verlaufende Stimulationslinie 16 fokussiert wird.

Die Lichtquelle 10 umfasst in diesem Beispiel einzelne Strahlungsquellen 11, welche entlang einer Linie angeordnet sind. Dies ist in Fig. 2 veranschaulicht, welche das in Fig. 1 dargestellte erste Ausführungsbeispiel in Draufsicht zeigt. Die entlang einer geraden Linie angeordneten Strahlungsquellen 11 der Lichtquelle 10 senden Stimulationslicht 12 aus, welches auch in der Ebene der Fig. 2 die Form divergenter Stimulationslichtbündel 15 aufweist. Die in der Ebene der Fig. 2 divergenten Stimulationslichtbündel 15 der einzelnen Strahlungsquellen 11 werden am Hohlspiegel 14 reflektiert und überlagern sich auf der Stimulationslinie 16. Wie in Fig. 2 zu erkennen ist, sind die einzelnen Strahlungsquellen 11 sowie der längliche Hohlspiegel 14 parallel zur Stimulationslinie 16 angeordnet. Die Stimulationslinie 16 liegt hierbei auf einer Phosphorschicht (nicht dargestellt) aus welcher ein darin abgespeichertes latentes Bild ausgelesen werden soll.

In diesem Ausführungsbeispiel ist der längliche Hohlspiegel 14 als Zylinderspiegel ausgebildet, dessen Querschnitt die Form eines Kreisbogens aufweist. Solche Zylinderspiegel sind kostengünstig herzustellen und führen bei den beschriebenen Vorrichtungen zu einer starken Verminderung von Abbildungsfehlern.

Der Querschnitt des Zylinderspiegels kann aber auch einen asphärischen, d. h. einen von der Form eines Kreisbogens abweichenden, Verlauf aufweisen, durch welchen Intensitäts-, Schärfen- und Breitenschwankungen entlang der Stimulationslinie 16 zusätzlich vermindert werden können. Insbesondere kann der Zylinderspiegel einen Querschnitt in Form eines Ellipsenbogens aufweisen. Ein derart geformter Zylinderspiegel weist zwei Brennlinien auf, wobei die Lichtquelle 10 in einer ersten Brennlinie angeordnet ist und die Stimulationslinie 16 entlang einer zweiten Brennlinie verläuft. In diesem Fall wird eine für beliebige Abbildungsmaßstäbe aberrationsfreie Fokussierung des Stimulationslichts 12 und damit eine sehr scharfe Begrenzung der Stimulationslinie 16 erreicht. Der Zylinderspiegel kann im Querschnitt aber auch die Form eines Parabelbogens aufweisen. Dies ist beispielsweise dann von Vorteil, wenn das von der Lichtquelle 10 ausgesandte Stimulationslicht 12 die Form eines parallelen Lichtbündels oder eines Lichtbündels mit einer nur sehr kleinen Divergenz aufweist.

Im dargestellten Beispiel weist der längliche Hohlspiegel 14 gerade Mantellinien auf, welche senkrecht zur Ebene der Figur 1 verlaufen. Im Sinne der Erfindung kann der längliche Hohlspiegel 14 aber auch eine Form aufweisen, bei welcher die Mantellinien gekrümmt sind. Hierdurch wird ein weiterer Freiheitsgrad bei der Ausgestaltung der Form des Hohlspiegels 14 und damit bei der Verminderung von Abbildungsfehlern, beispielsweise aufgrund zusätzlicher optischer Komponenten im Strahlengang des Stimulationslichtbündels 13, erhalten.

Wie Fig. 1 zeigt, sind die Lichtquelle 10 und die Stimulationslinie 16 jeweils um einen Kippwinkel ω gegen die optische Achse 5 des Hohlspiegels 14 gekippt. Die Kippung erfolgt hierbei um den Scheitelpunkt S, in welchem die optische Achse 5 des Hohlspiegels 14 diesen schneidet. Durch die Wahl des Kippwinkels ω kann der Abstand zwischen der Lichtquelle 10 und der Stimulationslinie 16 an ko n-struktive Erfordernisse, wie z. B. eine bestimmte Beleuchtungs- und/oder Detektionsgeometrie, angepasst werden.

Durch die Verwendung eines länglichen Hohlspiegels 14 zur Fokussierung der von den einzelnen Strahlungsquellen 11 ausgehenden divergenten Stimulationslichtbündel 13 wird eine wesentlich schärfer begrenzte und in ihrer Breite homogenere Stimulationslinie 16 erhalten als dies bei der aus dem Stand der Technik bekannten Fokussierung des Stimulationslichts 12 mittels Zylinderlinsen erreicht wird. Dies kann damit erklärt werden, dass bei der Fokussierung der einzelnen Stimulationslichtbündel 13 der Strahlungsquellen 11 mittels Zylinderlinsen Abbildungsfehler auf Grund einer Wölbung der einzelnen Fokuslinien, auch Focusbow genannt, entlang der Stimulationslinie 16 auftreten, welche zu einer Schärfenvariation und in Folge dessen einer Breitenvariation der Linie führen. Durch Verwendung eines länglichen Hohlspiegels werden diese Abbildungsfehler eliminiert oder zumindest stark reduziert, so dass eine Breitenvariation der Stimulationslinie 16 in Linienrichtung vermieden bzw. vermindert wird. Damit wird auch bei einer aus mehreren einzelnen Strahlungsquellen 11 zusammengesetzten Lichtquelle 10 eine gleichmäßig breite und dabei scharf begrenzte Stimulationslinie 16 auf der Phosphorschicht erhalten.

Bei dem in den Figuren 1 und 2 dargestellten ersten Ausführungsbeispiel wird die Lichtquelle 10 im Maßstab 1 : 1 auf die Stimulationslinie 16 abgebildet. Der Maßstab bezieht sich hierbei auf eine Abbildung bzw. Fokussierung in der Ebene der Figur 1. Durch diese 1 : 1-Abildung werden Abbildungsfehler, welche insbesondere eine Verunschärfung der Abbildung der Lichtquelle 10 auf die Stimulationslinie 16 zur Folge haben, stark vermindert. Insbesondere werden hierdurch Abbildungsfehler aufgrund von sphärischer Aberration vermieden. Die für eine hohe Bildqualität erforderliche scharfe Begrenzung der Stimulationslinie 16 wird jedoch nicht nur bei einem Abbildungsmaßstab von 1 : 1 erzielt, sondern auch bei Maßstäben zwischen 1 : 2 und 2 : 1. Bei von 1 : 1 abweichenden Abbildungsmaßstäben treten innerhalb des Bereichs zwischen 1 : 2 und 2 : 1 zwar Abbildungsfehler aufgrund von sphärischer Aberration, Astigmatismus und Koma auf, überraschenderweise sind diese jedoch so gering, dass dennoch eine sehr hohe Bildqualität gewährleistet werden kann.

Um Abbildungsfehler auf Grund von Astigmatismus und Koma besonders niedrig zu halten, wird der Abstand der Lichtquelle 10 und/oder der Stimulationslinie 16 vom Hohlspiegel 14 in Abhängigkeit des gewählten Kippwinkels ω gewählt. Insbesondere genügt der auf die jeweilige optische Achse 5 im Querschnitt des Hohlspiegels 14 bezogene Abstand d der einzelnen Strahlungsquellen 11 und/oder der Stimulationslinie 16 vom Scheitelpunkt S des Hohlspiegels 14 der Gleichung d = R cos²ω, wobei R den Krümmungsradius des Hohlspiegels bezeichnet. Im Falle des Hohlspiegels 14, der im Beispiel der Fig. 1 als Zylinderspiegel einen kreisbogenförmigen Querschnitt aufweist, entspricht der Krümmungsradius R dem Abstand des Kreisbogens zum Mittelpunkt P dieses Kreises.

Im ersten Ausführungsbeispiel der Figuren 1 und 2 umfasst die Lichtquelle 10 mehrere entlang einer geraden Linie angeordnete Strahlungsquellen 11. Alternativ kann die Lichtquelle 10 auch als Linienlichtquelle ausgebildet sein, welche das Stimulationslicht 12 entlang einer kontinuierlichen Linie aussendet. Hierbei treten im Gegensatz zu einer aus mehreren einzelnen Strahlungsquellen 11 zusammengesetzten Lichtquelle 10 keine Breitenschwankungen entlang der Stimulationslinie 16 mehr auf. Abbildungsfehler aufgrund von sphärischer Aberration und/oder Astigmatismus werden durch die erfindungsgemäße Verwendung eines länglichen, insbesondere zylinderförmigen, Hohlspiegels stark vermindert, so dass eine deutlich erhöhte Schärfe der Stimulationslinie erreicht wird.

Bei einer weiteren alternativen Ausgestaltung weist die Lichtquelle 10 nur eine Strahlungsquelle 11 auf, wobei das von der Strahlungsquelle 11 ausgehende Stimulationslichtbündel 13 von einer Ablenkeinrichtung periodisch abgelenkt wird und von dem länglichen Hohlspiegel 14 auf einen punktförmigen oder linienförmigen Fokusbereich auf die Phosphorschicht 21 fokussiert wird. Aufgrund der periodischen Ablenkung des Stimulationslichtbündels 13 überstreicht der Fokusbereich die Phosphorschicht entlang der Stimulationslinie 16. Das jeweils angeregte Emissionslicht wird dabei von einem Detektor erfasst. Vorrichtungen diesen Typs werden auch als Flying Spot-Systeme bezeichnet. Auch bei solchen Systemen werden Abbildungsfehler, die zu einer Verunschärfung und Verbreiterung des Fokusbereichs und damit zu einer Verminderung der Bildqualität führen würden, durch die Erfindung deutlich reduziert.

Fig. 3 zeigt ein zweites Ausführungsbeispiel der Erfindung, bei welchem die von der Lichtquelle 10 ausgesandten divergenten Stimulationslichtbündel 13 zunächst an einem länglichen Planspiegel 18 reflektiert werden, bevor sie auf den länglichen Hohlspiegel 14 treffen und von diesem entlang der Stimulationslinie 16 auf die Phosphorschicht 21, welche durch eine Trägerschicht 23 mechanisch stabilisiert wird, fokussiert werden. Durch die Verwendung des Planspiegels 18 werden gegenüber dem in Fig. 1 dargestellten ersten Ausführungsbeispiel zusätzliche Möglichkeiten bei der räumlichen Anordnung der Lichtquelle 10, des Hohlspiegels 14 sowie der Phosphorschicht 21 erhalten, die eine Anpassung der erfindungsgemäßen Vorrichtung an konstruktive Erfordernisse ermöglichen, ohne zusätzliche Abbildungsfehler zu verursachen.

Anstelle des Planspiegels 18 kann auch ein geeignetes optisches Prisma zur Ablenkung des Stimulationslichtbündels 13 verwendet werden. Es ist außerdem möglich, zur Ablenkung des Stimulationslichtbündels 13 einen länglichen konvexen Spiegel oder einen weiteren länglichen Hohlspiegel zu verwenden.

Die räumliche Anordnung der Lichtquelle 10, des Hohlspiegels 14 sowie der auf der Phosphorschicht 21 verlaufenden Stimulationslinie 16 relativ zueinander erfolgt in diesem Beispiel analog zu dem in den Figuren 1 und 2 dargestellten ersten Ausführungsbeispiel. Insbesondere sind die Lichtquelle 10 und der Planspiegel 18 so angeordnet, dass die Lichtquelle 10 ebenfalls um einen - in diesem Falle virtuellen - Kippwinkel ω gegen die optische Achse 5 des Hohlspiegels 14 gekippt ist. Die Abstände der Lichtquelle 10 sowie der Phosphorschicht 21 vom Scheitelpunkt S des Hohlspiegels 14 sind ebenfalls so gewählt, dass eine 1 : 1-Abbildung - bezogen auf die Ebene der Figur 3 - erfolgt und damit Abbildungsfehler auf ein Minimum reduziert werden.

Das entlang der Stimulationslinie 16 in der Phosphorschicht 21 angeregte Emissionslicht 17 wird mittels einer Abbildungsoptik 24 auf den Detektor 25 abgebildet. Der Detektor 25 ist als linearer Detektor ausgebildet, der eine Vielzahl von parallel zur Stimulationslinie 16 angeordneten einzelnen Detektorelementen aufweist. Parallel zum linearen Detektor 25 verläuft auch die Abbildungsoptik 24, welche vorzugsweise als lineares Mikrolinsen- oder Gradientenindexlinsen-Array, insbesondere Selfoclinsen-Array, ausgebildet ist.

Beim Auslesen des in der Phosphorschicht 21 gespeicherten latenten Bildes wird die zu einer Leseeinheit 30 zusammengefasste Vorrichtung in einer Transportrichtung T über die Phosphorschicht 21 bewegt, welche entlang der Stimulationslinie 16 sukzessive angeregt und ausgelesen wird. Alternativ oder zusätzlich zur Bewegung der Leseeinheit 30 kann auch die auf der Trägerschicht 23 befindliche Phosphorschicht 21 relativ zur Leseeinheit 30 bewegt werden.

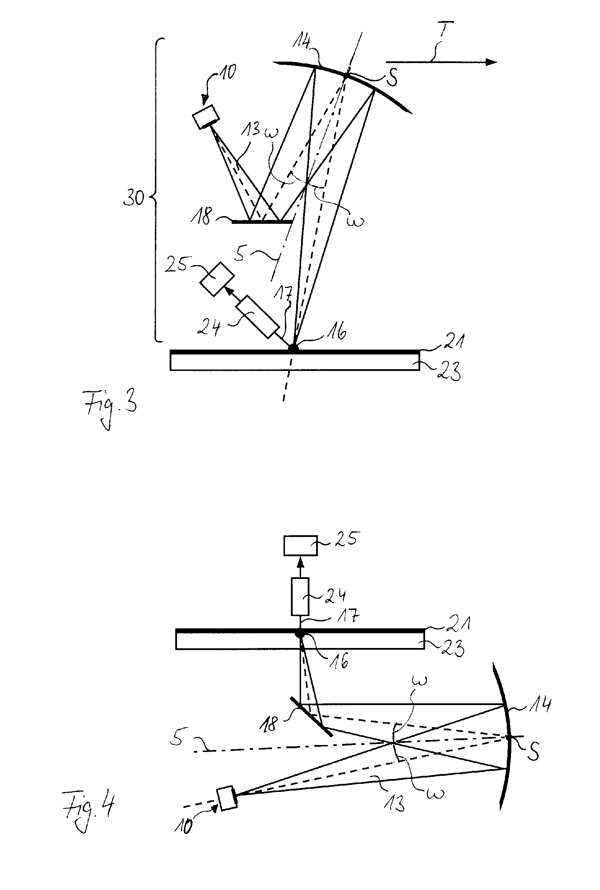

Fig. 4 zeigt ein drittes Ausführungsbeispiel der Erfindung, welches einen besonders kompakten Aufbau aufweist. Der Querschnitt des Hohlspiegels 14 ist in diesem Beispiel im Wesentlichen senkrecht zur Phosphorschicht 21 orientiert, wodurch der Abstand der Lichtquelle 10 von der Phosphorschicht 21 vermindert werden kann. Die von der Lichtquelle 10 ausgehenden divergenten Stimulationslichtbündel 13 treffen in diesem Beispiel direkt auf den Hohlspiegel 14 und werden von diesem auf die Stimulationslinie 16 fokussiert, wobei in den Strahlengang zwischen dem Hohlspiegel 14 und der Phosphorschicht 21 ein Planspiegel 18 eingebracht ist, welcher das von dem Hohlspiegel 14 reflektierte und nunmehr konvergente Lichtbündel auf die Stimulationslinie 16 lenkt. Wie auch in diesem Ausführungsbeispiel eröffnet der Planspiegel 18 eine Vielzahl von Möglichkeiten zur Anordnung der Lichtquelle 10, des Hohlspiegels 14 und der Phosphorschicht 21 relativ zueinander, wodurch insbesondere eine sehr kompakte Anordnung der einzelnen Komponenten erreicht werden kann.

Bei dem hier dargestellten Ausführungsbeispiel der Fig. 4 befindet sich die auszulesende Phosphorschicht 21 auf einer Trägerschicht 23, welche für das Stimulationslicht durchlässig ist, so dass die Phosphorschicht 21 von ihrer Unterseite her angeregt werden kann. Im dargestellten Fall wird das Emissionslicht 17 von der Oberseite her durch eine Abbildungsoptik 24 auf einen Detektor 25 abgebildet. Alternativ kann das Emissionslicht 17 aber auch durch die transparente Trägerschicht 23 von der Unterseite her erfasst werden. Hinsichtlich der Abbildungsoptik 24 sowie des Detektors 25 gelten die Ausführungen zu dem in Fig. 3 gezeigten zweiten Ausführungsbeispiel entsprechend. Auch zur erfindungsgemäßen Wahl des länglichen Hohlspiegels 14, des Neigungswinkels ω sowie des Abbildungsmaßstabs gelten die Ausführungen zu dem in den Figuren 1 bis 3 beschriebenen Ausführungsbeispielen entsprechend.

## Patentansprüche

1. Vorrichtung zum Erfassen von in einer Phosphorschicht enthaltenen Informationen mit
- mehreren einzelnen Strahlungsquellen (11) zum Aussenden von Stimulationslicht (12), welches entlang einer Stimulationslinie (16) auf die Phosphorschicht (21) trifft und zur Anregung von Emissionslicht (17) in der Phosphorschicht (21) geeignet ist, und
- einem Detektor (25) zum Erfassen des in der Phosphorschicht (21) angeregten Emissionslichts (17),
**gekennzeichnet durch**
einen länglichen Hohlspiegel (14) zur Fokussierung des von den einzelnen Strahlungsquellen (11) ausgesandten Stimulationslichts (12) auf die Phosphorschicht (21).

2. Vorrichtung nach Anspruch 1, **dadurch gekennzeichnet, dass** die einzelnen Strahlungsquellen (11) entlang einer Linie angeordnet sind, welche insbesondere parallel zur Stimulationslinie (16) verläuft.

3. Vorrichtung nach einem der vorangehenden Ansprüche, **dadurch gekennzeichnet, dass** die einzelnen Strahlungsquellen (11) jeweils Stimulationslichtbündel (13) aussenden, welche durch den Hohlspiegel auf die Stimulationslinie (16) fokussiert werden und sich auf der Stimulationslinie (16) zumindest teilweise überlagern.

4. Vorrichtung nach einem der vorangehenden Ansprüche, **dadurch gekennzeichnet, dass** der Hohlspiegel (14) parallel zur Stimulationslinie (16) angeordnet ist.

5. Vorrichtung nach einem der vorangehenden Ansprüche, **dadurch gekennzeichnet, dass** der Hohlspiegel (14) als Zylinderspiegel ausgebildet ist, welcher im Querschnitt die Form eines Kreisbogens aufweist.

6. Vorrichtung nach einem der Ansprüche 1 bis 4, **dadurch gekennzeichnet, dass** der Hohlspiegel (14) als Zylinderspiegel ausgebildet ist, dessen Querschnitt einen asphärischen Verlauf aufweist.

7. Vorrichtung nach Anspruch 6, **dadurch gekennzeichnet, dass** der Hohlspiegel (14) als Zylinderspiegel ausgebildet ist, welcher im Querschnitt die Form eines Ellipsenbogens oder Parabelbogens aufweist.

8. Vorrichtung nach einem der Ansprüche 5 bis 7, **dadurch gekennzeichnet, dass** die optische Achse (5) im Querschnitt des Hohlspiegels (14) diesen in einem Scheitelpunkt (S) schneidet und die Strahlungsquellen (11) jeweils um einen Kippwinkel (ω) um den Scheitelpunkt (S) gegen die optische Achse (5) des Hohlspiegels (14) gekippt sind.

9. Vorrichtung nach Anspruch 8, **dadurch gekennzeichnet, dass** der auf die optische Achse (5) im Querschnitt des Hohlspiegels (14) bezogene Abstand (d) der Strahlungsquellen (11) und/oder der Stimulationslinie (16) vom Scheitelpunkt (S) folgender Beziehung genügt: d = R cos²ω, wobei R den Krümmungsradius des Hohlspiegels (14) bezeichnet.

10. Vorrichtung nach einem der vorangehenden Ansprüche, **dadurch gekennzeichnet, dass** die Strahlungsquellen (11) in einem Maßstab von 1 : M auf die Phosphorschicht (21) abgebildet werden, wobei M einen Wert zwischen 0,5 und 2 annimmt.

11. Vorrichtung nach einem der vorangehenden Ansprüche, **dadurch gekennzeichnet, dass** der Detektor (25) mehrere parallel zur Stimulationslinie (16) angeordnete Detektorelemente aufweist.
